# FASCICULE DE BREVET EUROPEEN

(11) **EP 3 771 926 B1**
(45) Date de publication et mention de la délivrance du brevet: **30.03.2022**
(21) Numéro de dépôt: 20182254.1
(22) Date de dépôt: 25.06.2020
(51) Int. Cl.: G01S 13/78

(54) **RADAR SECONDAIRE A GESTION ADAPTATIVE DU FAISCEAU MODE S PAR AVION**
SEKUNDÄRRADAR MIT ADAPTIVER STEUERUNG DES MODE-S-STRAHLS DURCH EIN FLUGZEUG
SECONDARY RADAR WITH ADAPTIVE MANAGEMENT OF THE MODE S BEAM BY AIRCRAFT

(30) Priorité: 29.07.2019 FR 1908592
(43) Date de publication de la demande: 03.02.2021
(73) Titulaire: THALES, 92400 Courbevoie (FR)
(72) Inventeur: BILLAUD, Philippe, 91470 Limours (FR); COLIN, Sylvain, 76520 Ymare (FR)
(74) Mandataire: Marks & Clerk France

(56) Documents cités:
- WO-A1-2010/049284
- FR-A1- 2 965 063
- US-A- 5 218 365
- US-A1- 2009 085 792
- M E Weber ET AL: "Secondary Surveillance Phased Array Radar (SSPAR): Initial Feasibility Study", , 6 février 2014 (2014-02-06), pages 1-41, XP055427931, Extrait de l'Internet: URL:http://ai2-s2-pdfs.s3.amazonaws.com/27 37/7de05860bc597a6645408ac015325701a059.pd f [extrait le 2017-11-22]

## Description

La présente invention concerne un radar secondaire (SSR Secondary Surveillance Radar) à gestion adaptative du faisceau mode S par avion, notamment lors de la gestion de cibles évolutives très proches du radar, de charge sectorisée importante en avions à traiter, de cible à longue distance, cette gestion étant particulièrement adaptée au type de cible (courte, moyenne et longue portée).

Un domaine privilégié de l'invention est le contrôle du trafic aérien (ATC) pour lequel la performance des radars utilisés est fondamentale tout particulièrement au niveau de la détection des aéronefs. De plus les nouvelles normes requièrent à la fois des performances minimales par trajectoire dans la couverture radar, ce qui est particulièrement difficile à garantir pour les cibles lointaines où le niveau RF est faible avec une forte sensibilité aux cibles non sollicitées de type Fruit (« False Reply Unsynchronized in Time ») notamment, des charges en avions sectorisées très élevées tout en assurant plusieurs transactions EHS (« Enhanced Surveillance ») à chaque tour avec chaque avion, ceci de plus avec un taux de ré-interrogation très faible.

Le contrôle aérien est principalement basé sur le radar mode S dont la fiabilité de détection et de décodage est reconnue.

Les performances d'un radar mode S sont donc directement liées à la disponibilité des aéronefs avec lequel il dialogue. En effet un radar secondaire, contrairement à un radar primaire, se distingue par le fait qu'il établit un dialogue basé sur :
- une interrogation sélective destinée à une cible précise via son adresse mode S à 1030MHz ;
- une réponse du transpondeur de l'aéronef encodée avec son adresse mode S à 1090MHz.

Un radar secondaire ATC est dimensionné pour détecter et localiser précisément des cibles à très longues portées, typiquement supérieures à 470km ou 250Nm. Son antenne mécanique, souvent tournante, a un fort gain et un faisceau azimut très étroit, de l'ordre de 2,4° en lien avec la largeur physique de l'antenne qui est généralement de 9m. En conséquence, le temps d'éclairement des cibles est relativement faible : classiquement de 30 à 100 millisecondes selon la vitesse de rotation du radar. Il en résulte que toute perte de temps d'éclairement est une réelle limite des performances du radar.

Le transpondeur d'un aéronef dialogue avec tous les radars secondaires l'environnant. Sa capacité de dialogue est physiquement limitée mais doit respecter les minimums définis par l'ICAO Annexe 10. Au-delà de ces limites, finalement très basses avec 16 réponses longues mode S par seconde, telles que celles requises en surveillance EHS qui est le mode de fonctionnement désormais requis en Europe, le transpondeur peut ne pas répondre aux interrogations sélectives des radars. Cependant la probabilité de détection d'un radar est définie sur la base d'une disponibilité de 90% du transpondeur dans la largeur de lobe effectif, noté EBW (Effectif Beam Width), correspondant à une durée entre 30 et 100 ms.

De plus en cas de réception d'une interrogation, même si celle-ci ne concerne pas l'aéronef, celui-ci se bloque pour un temps donné (valeur maximale imposée dans ICAO Annex X vol IV). Cela réduit la disponibilité du transpondeur, ce dernier ne répondant pas aux interrogations qu'il reçoit dans cette durée, voire réduit la portée effective du radar.

Dans le cas typique d'un radar d'aéroport, mais aussi applicable au radar « En route » avec souvent moins de cibles concernées, les cibles proches (souvent à une distance inférieure à 5Nm mais pouvant aller aussi jusqu'à plusieurs dizaines de Nm) ont des fenêtres d'évolution de la position prédite d'une grande taille en azimut, jusqu'à 20° par exemple (à l'approche, la trajectoire d'un avion cible peut en effet varier de telle façon que sa position ne puisse être prédite au mieux que dans ces fenêtres suite à l'évolution possible de trajectoire des avions en phase de manœuvre autour d'un aéroport, ce phénomène étant bien sûr accru dans le cas d'un avion militaire par nature plus manoeuvrant). Un radar ATC à antenne mécanique tournante a usuellement un faisceau unique avec un EBW (Equivalent BandWidth) de l'ordre du lobe à 3 dB, soit 2,4°. Lors de la phase de chasse d'une cible proche, le radar échantillonne la fenêtre d'évolution avec son faisceau étroit ce qui conduit classiquement (pour la plupart des cibles en pratique sans évolution mais potentiellement évolutive dans un hippodrome par exemple) à plus de 15 interrogations sélectives dont la plupart sont souvent inutiles (typiquement 13 sur 15) puisque l'avion, la plupart du temps, n'a pas réalisé de manœuvre (trajectoire rectiligne) et est donc à la position prédite hors évolution potentielle.

Ces interrogations induisent donc :
- une perte de temps radar en se substituant à la durée d'éclairement des autres cibles réduisant alors le pouvoir d'extraction de données mode S du radar (registre de donnée BDS (commB Data Selector requis en EHS), voire le nombre maximal de cibles qu'il peut détecter dans un secteur ;
- une pollution des autres cibles qui se bloquent momentanément sur les interrogations qui ne les concernent pas, ce qui induit pour ces autres cibles la génération de nouvelles interrogations par les autres radars.

Un but de l'invention est notamment de réduire les inconvénients précités.

A cet effet, l'invention a pour objet un radar secondaire comportant une antenne présentant un diagramme de rayonnement formant une voie somme dite SUM, un diagramme de rayonnement formant une voie différence dite DIFF et un diagramme formant une voie de contrôle dite CONT, des moyens pour générer au moins des messages d'interrogation sur la voie SUM et des signaux ISLS sur la voie CONT, des moyens d'émission de ces messages respectivement par la voie SUM et par la voie CONT, des moyens de réception et de traitement des signaux reçus par les voies SUM, DIFF et CONT configurés pour détecter les réponses de cibles sur les signaux reçus par la voie SUM et/ou DIFF et réaliser un traitement d'écartométrie et un traitement RSLS sur ces réponses, les moyens d'émission étant configurés de telle sorte que, pour chaque cible indépendamment, la largeur du faisceau de transmission des interrogations et de réception des réponses sélectives mode S est commandée dynamiquement en fonction de la fenêtre d'évolution de ladite cible et de la position de l'axe de ladite antenne dans ladite fenêtre afin d'assurer la détection de ladite cible en réduisant le nombre d'interrogations sélectives par une sous-interrogation sélective de ladite cible tout en garantissant son positionnement précis en azimut :
- en pré-localisant ladite cible en bord du lobe principal de réception de ladite antenne par écartométrie entre les signaux reçus sur les voies DIFF et SUM ;
- en réinterrogeant sélectivement en mode S ladite cible pré-localisée par calcul de la période « Roll Call » la plus proche du centre dudit lobe principal pour assurer la précision en azimut.

Dans un mode de réalisation particulier, les moyens d'émission sont configurés de telle sorte que, pour chaque cible, la largeur du faisceau de transmission des interrogations et de réception des réponses sélectives mode S est commandée en fonction du nombre pré-évalué de transactions sélectives à traiter dans un azimut donné, ledit faisceau étant élargi indépendamment pour chaque cible si ledit nombre est supérieur au nombre potentiel réalisable de transactions sélectives dans un faisceau de type standard :
- en répartissant les transactions dites « data link » en dehors dudit faisceau standard alors dédié principalement à la surveillance ;
- en pré-localisant la cible en bord dudit lobe principal par écartométrie étendue en exploitant les réponses reçues sur les voies DIFF et SUM ;
- en conservant une transaction, de type « data link » ou non, et en réinterrogeant sélectivement en mode S ladite cible pré-localisée par calcul du signal « Roll Call » le plus proche du centre dudit lobe principal pour assurer la précision en azimut.

L'augmentation de la largeur dudit faisceau de transmission des interrogations sélectives mode S est par exemple obtenue par atténuation du champ rayonné par le diagramme CONT.

Les moyens pour générer des messages d'interrogations étant en plus configurés pour générer également des messages d'interrogation sur la voie DIFF, et les moyens d'émission étant également configurés pour pouvoir émettre ces messages par la voie DIFF de l'antenne, ledit radar pré-localise par exemple la cible en bord dudit lobe principal par écartométrie en exploitant les réponses reçues sur les diagrammes DIFF et CONT.

Dans un mode de réalisation particulier, les moyens d'émission sont configurés de telle sorte que, pour chaque cible, la largeur du faisceau de transmission des interrogations et de réception des réponses sélectives mode S est commandée en fonction du nombre pré-évalué de transactions sélectives à traiter dans un azimut donné, ledit faisceau étant élargi si ledit nombre est supérieur au nombre potentiel réalisable de transactions sélectives dans un faisceau de type standard :
- en répartissant les transactions dites « data link » en dehors dudit faisceau standard totalement alloué à la Surveillance ;
- en pré-localisant la cible en bord dudit lobe principal par écartométrie très étendue en exploitant les réponses reçues sur les diagrammes DIFF et CONT ;
- en conservant une transaction, de type « data link » ou non, et en ré-interrogeant sélectivement en mode S ladite cible pré-localisée par calcul du signal « Roll Call » le plus proche du centre dudit lobe principal pour assurer la précision en azimut.

L'augmentation de la largeur dudit faisceau de transmission des interrogations sélectives mode S est par exemple obtenue en utilisant la voie DIFF pour l'émission desdites interrogations et en abaissant le champ rayonné (34) par le diagramme CONT.

Les moyens d'émission sont par exemple configurés de telle sorte que, pour chaque cible, la largeur du faisceau de transmission des interrogations et de réception des réponses sélectives mode S est commandée en fonction d'un taux de détection des réponses d'avion pour lequel le nombre d'interrogations est ainsi potentiellement doublé en interrogeant sélectivement chaque cible de ce type successivement sur DIFF, puis SUM et enfin sur DIFF si encore besoin.

Le radar secondaire est par exemple du type ATC ou du type IFF.

D'autres caractéristiques et avantages de l'invention apparaîtront à l'aide de la description qui suit, faite en regard de dessins annexés qui représentent :
[Fig.1] une illustration des diagrammes d'émission/réception d'une antenne ATC utilisée à titre d'exemple, l'invention étant également applicable pour d'autres types d'antenne ;
[Fig.2] une illustration de la puissance (en dBm) d'un ensemble de plots reçus par le radar en détection en fonction de la distance à la cible ;
[Fig.3a],

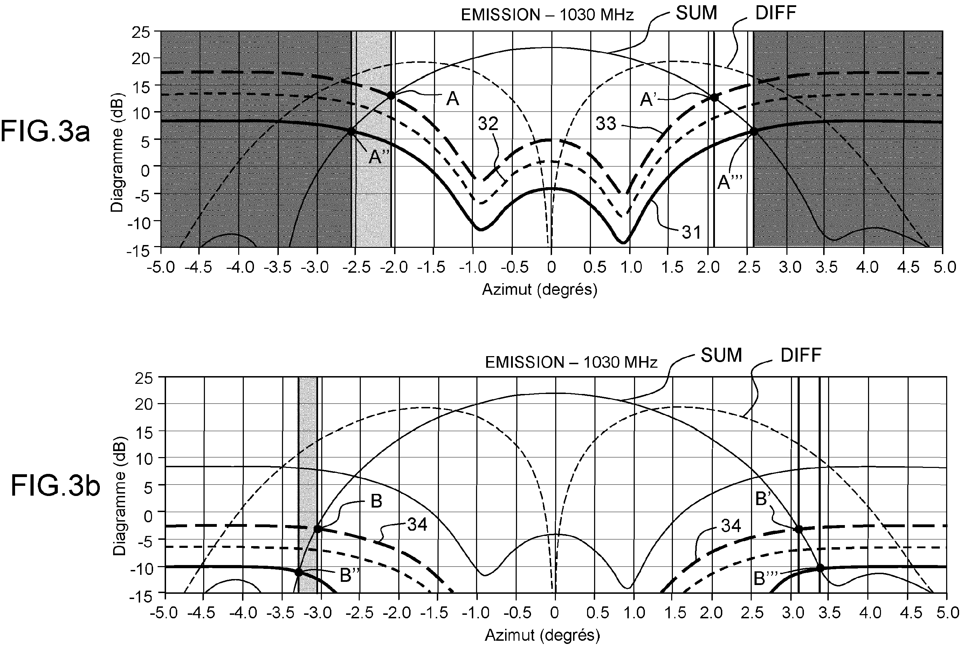

[Fig.3b] et

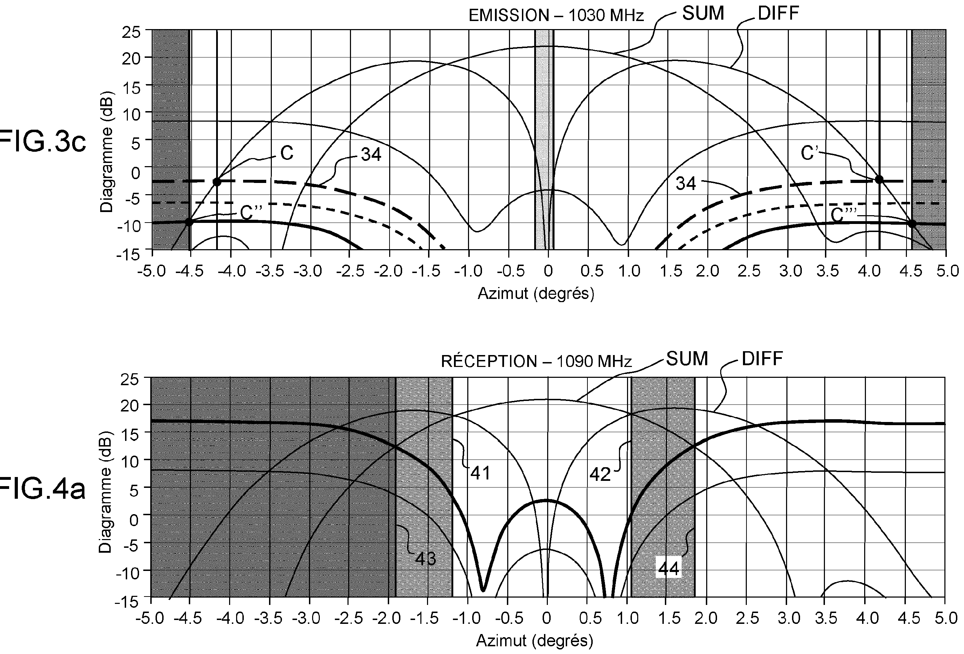

[Fig.3c] différents réglages possibles du faisceau d'émission, respectivement du type « Standard Beam », du type « Wide Beam » et du type « Enhanced Wide Beam » ;
[Fig.4a] et

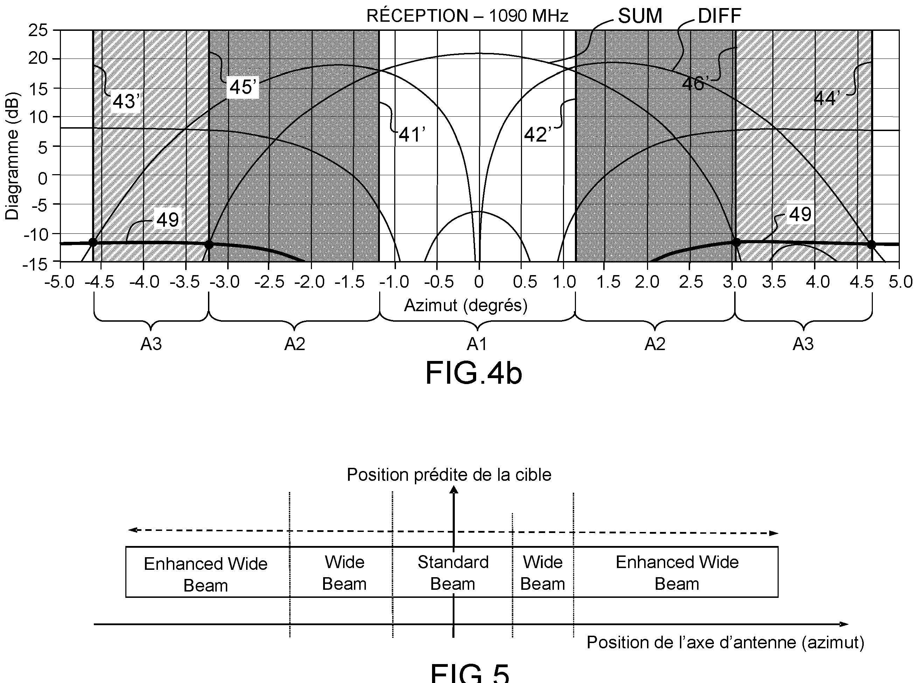

[Fig.4b] respectivement une illustration en réception d'un réglage de faisceau classique et une illustration de réglages de faisceau réception selon l'invention ;
[Fig.5] une illustration du principe de gestion dynamique d'un faisceau selon la position de l'axe de l'antenne (en azimut) vis-à-vis de la fenêtre possible de position d'une cible évolutive ;

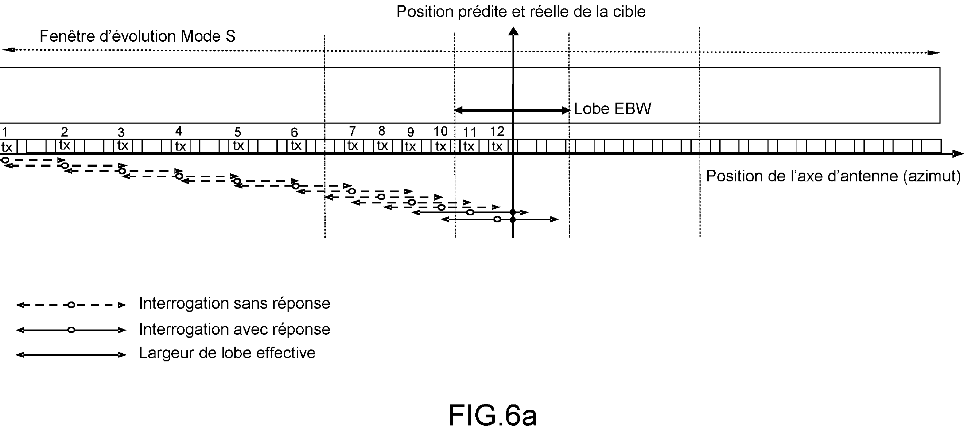

[Fig.6a] et

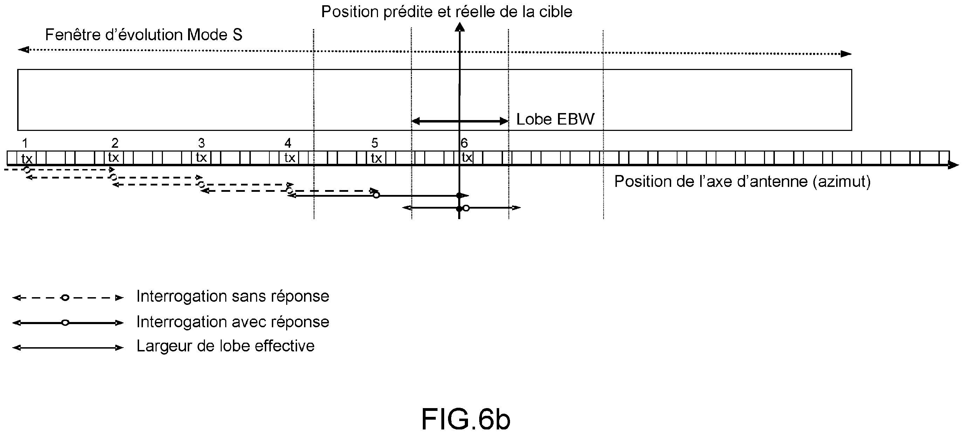

[Fig.6b] une illustration de séquencements d'interrogations pour une cible non évolutive, respectivement usuels et selon l'invention ;

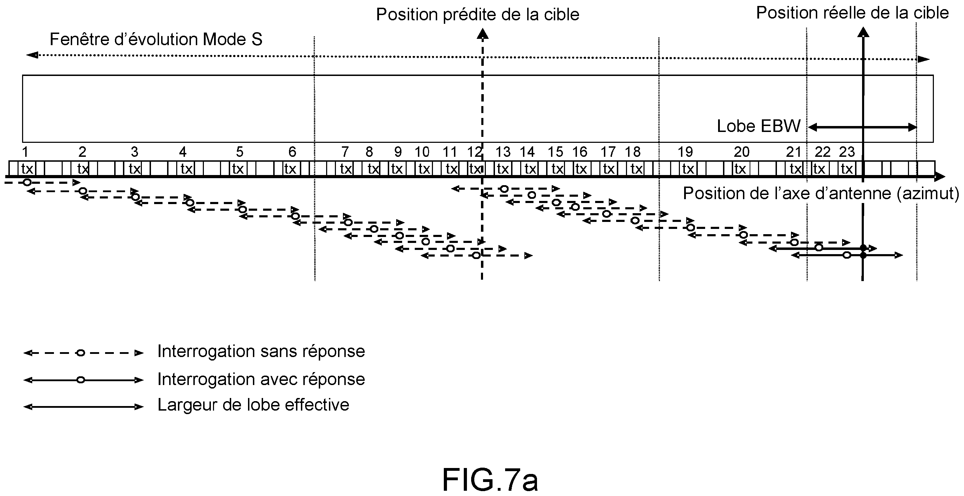

[Fig.7a] et

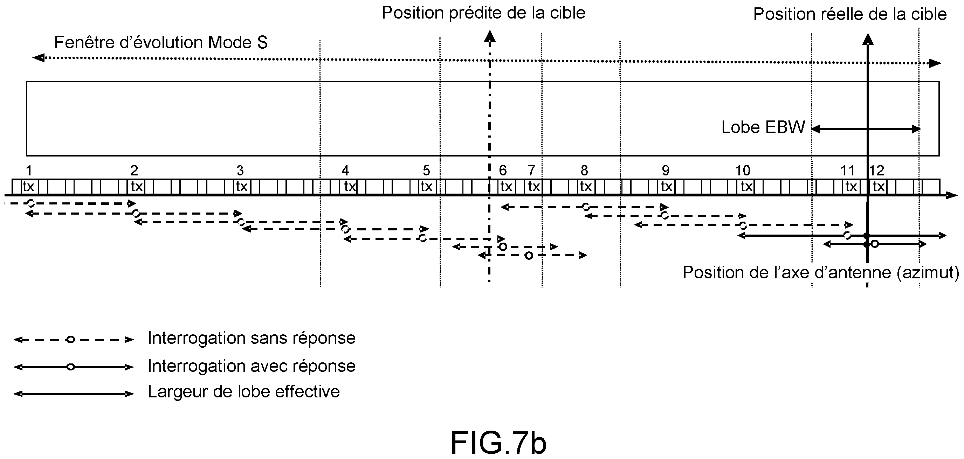

[Fig.7b] une illustration de séquencements d'interrogations pour une cible évolutive (en azimut croissant de tour à tour), respectivement usuels et selon l'invention ;
[Fig.8a],

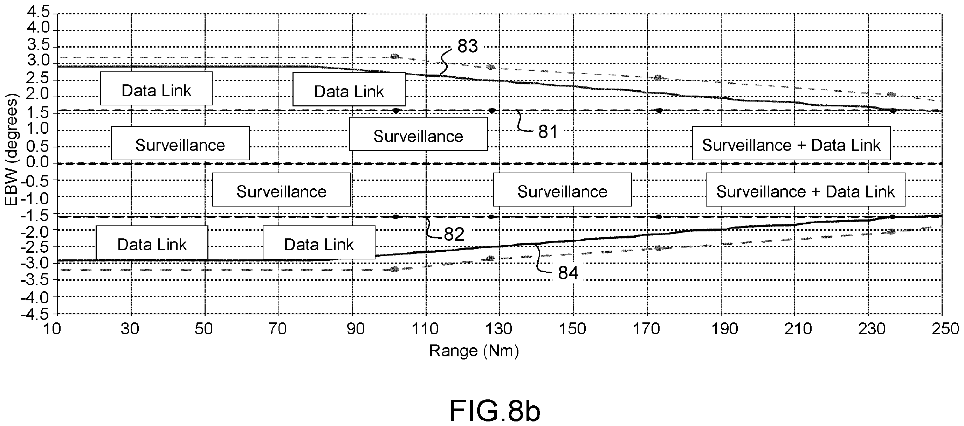

[Fig.8b] et

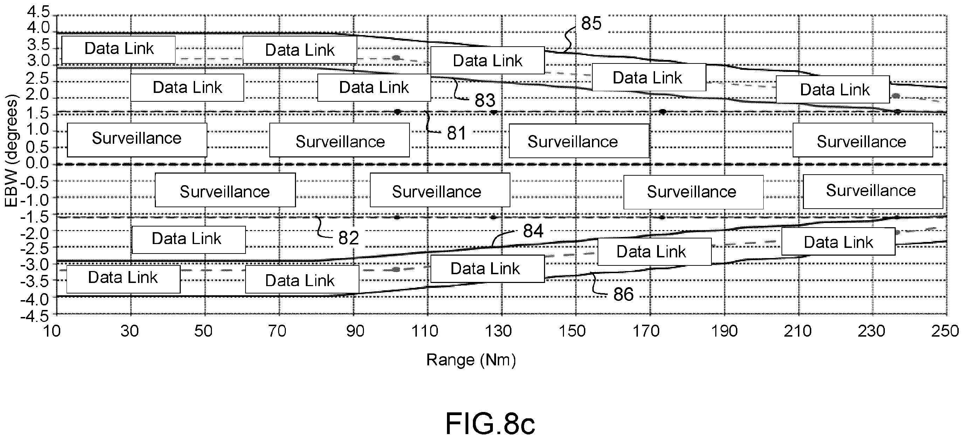

[Fig.8c] une illustration des transactions mode S en fonction de la distance à une cible, respectivement en mode standard, faisceau élargi de type « Wide Beam » et en faisceau élargi de type « Enhanced Wide Beam » ;

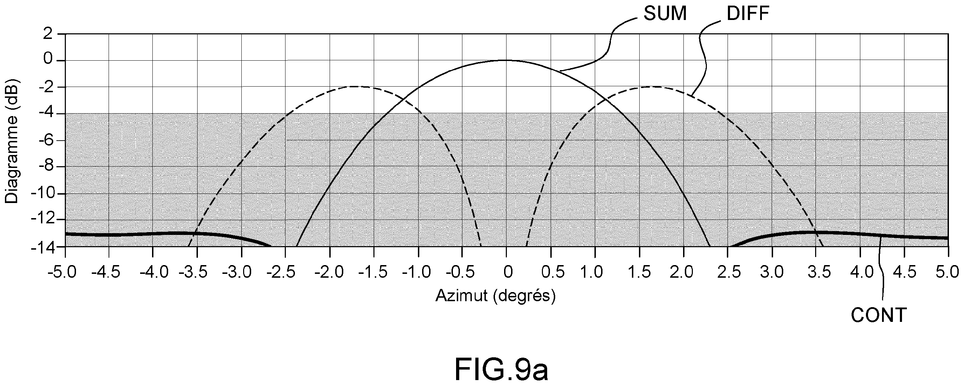

[Fig.9a] et

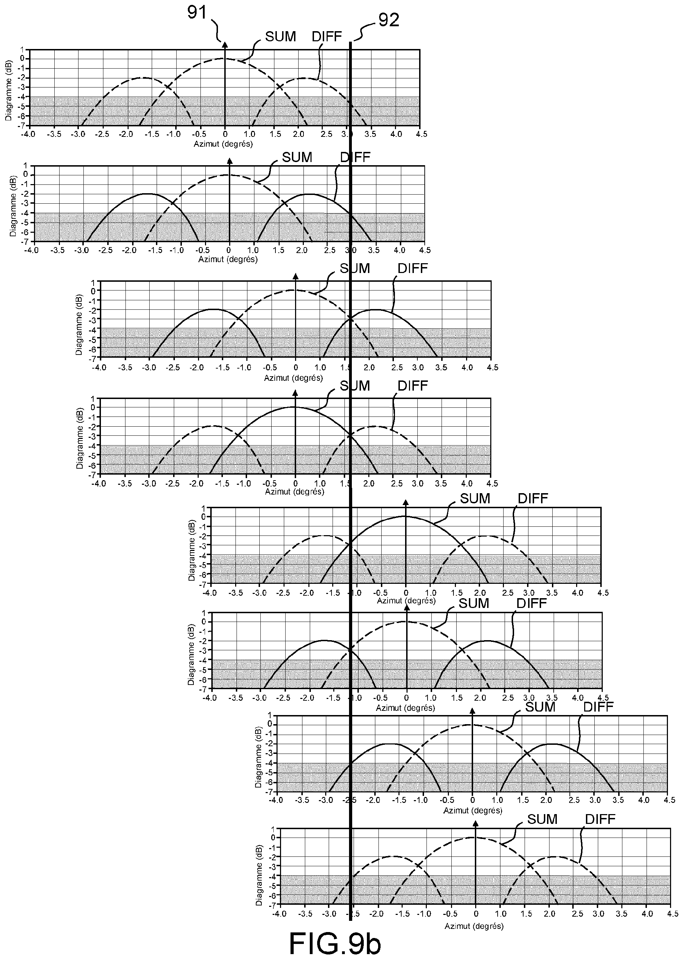

[Fig.9b] une illustration des transactions mode S pour une cible à très longue distance.

Comme le montrera plus en détail la description qui suit, la solution apportée par l'invention consiste en une gestion optimisée de la largeur du faisceau effectif d'un radar ATC, ou IFF selon l'application, en l'adaptant de façon dynamique aux caractéristiques de la cible concernée et aux tâches à effectuer par le radar avec celle-ci.

Quand une cible est proche, voire à moyenne distance, les bilans montant (émission à 1030MHz) comme descendant (réception à 1090MHz) sont très bons, pour la plupart des avions car ils ne sont pas à très haute élévation (^{≈} <40°). Il est donc possible d'accroitre la largeur du faisceau effectif (notée EBW) en réglant dynamiquement et indépendamment, par transactions mode S (interrogations et réponses) de chaque cible, la largeur du faisceau utilisé en émission et en cohérence en réception.

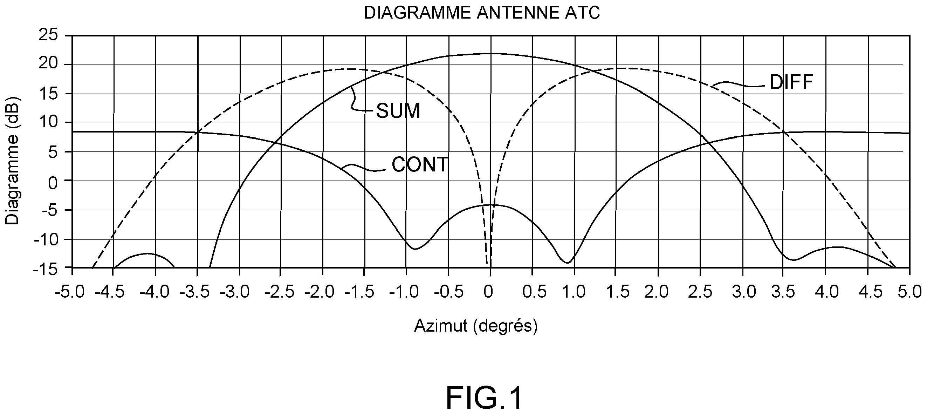

Avant de continuer plus en avant la présentation de l'invention, on rappelle sommairement les principes de base bien connus, en émission et en réception, d'un radar secondaire à l'aide de la figure 1. Par convention dans cette figure, les diagrammes utilisés en émission & réception sont en trait plein et les diagrammes en trait discontinu sont utilisés usuellement qu'en réception.

Un radar secondaire émet les interrogations à la fréquence de 1030 MHz via le diagramme somme (SUM) de l'antenne, constituée d'un lobe d'émission délimité en azimut par l'impulsion ISLS (« Interrogation Side Lobe Suppression ») émise via le diagramme contrôle (CONT) du même panneau avant et du patch arrière de l'antenne. Il reçoit les réponses transmises à la fréquence de 1090 MHz par les différentes cibles en réception sur le diagramme somme (SUM) et sur le diagramme différence (DIFF) constituée de deux lobes symétriques, cette dernière voie permettant de localiser les cibles en azimut par mesures d'écartométrie au sein du lobe principal SUM. Ces diagrammes en réception sont accompagnés de lobes secondaires, de plus faible niveau mais cependant suffisamment élevés pour permettre la réception non voulue de cible proche en dehors de l'axe de l'antenne. On prévoit donc une voie de contrôle (CONT) en réception de niveau supérieur aux lobes secondaires, pour neutraliser les détections sur les lobes secondaires.

A cet effet, en émission pour éviter les réponses de transpondeur en dehors du lobe principal de l'antenne :
- lorsque le niveau signal ISLS rayonné par CONT est supérieur au niveau de l'interrogation rayonné par SUM, le transpondeur de la cible ne répond pas ;
- quand les niveaux rayonnés sont tels que CONT+9dB >SUM ≥ CONT le transpondeur peut répondre ou pas ;
- et enfin quand les niveaux rayonnés sont tels que SUM ≥ CONT+9dB le transpondeur doit répondre.

En réception, si le niveau du signal reçu par la voie CONT augmenté d'une valeur paramétrable signée « RSLS » (« Receiver Side Lobe Suppression ») est supérieur au niveau reçu par la voie SUM, le radar ne traite pas la réponse. La voie de contrôle filtre en quelque sorte les signaux émis ou captés par les lobes secondaires en ne traitant que les signaux dont le niveau de signal lors d'une détection par SUM vs CONT correspond à une cible présente dans le lobe principal.

En pratique, usuellement pour visualiser sur un diagramme d'antenne l'EBW minimale garantie, on remonte généralement le niveau de la voie CONT de ISLS=RSLS=9 dB. En d'autres termes, on compare le niveau sur SUM avec le niveau sur CONT augmenté de 9 dB. Cette remontée permet de visualiser la largeur effective garantie du lobe principal de la voie somme, cette largeur effective étant la largeur EBW mentionnée précédemment. La voie de contrôle est généralement constituée de deux voies, une voie à l'avant de l'antenne (CONT_Front) et une voie à l'arrière de l'antenne (CONT_Back). On utilise ici la voie CONT_Front que l'on appellera voie CONT par la suite.

Les tracés des figures 3a, 3b et 3c (qui seront présentées par la suite) illustrent trois réglages possibles des transpondeurs pour décider de répondre :
- CONT + 0 dB : limite de Non réponse du transpondeur, (trait plein gras : en deça le transpondeur en répond pas) ;
- CONT + 9 dB : limite de garantie de réponse du transpondeur (grands tirets gras : au-delà le transpondeur doit répondre) ;
- CONT + 5 dB : moyenne de réponse d'un transpondeur typique, soit la plupart des cibles (petits tirets gras : au-delà le transpondeur typique répond).

On note que l'azimut représente la position d'une cible ou de l'axe dans le référentiel absolu alors que le gisement représente l'angle relatif à la position de l'antenne. En toute rigueur les diagrammes de la figure 1 sont fonction du gisement. Par la suite, on confondra azimut et gisement.

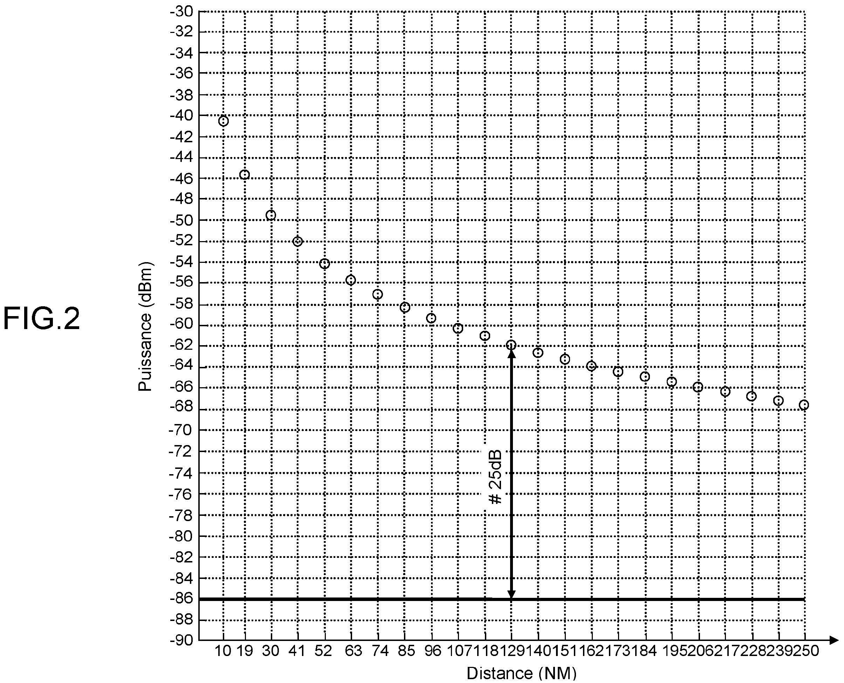

La figure 2 illustre la puissance d'un ensemble de plots de détection (en dBm) en fonction de la distance à la cible exprimée en NM (miles nautiques), pour un exemple d'avion de bonne sensibilité aux interrogations du radar et de bonne puissance lors de ses réponses à celles-ci. Ce tracé montre, en considérant un seuil de traitement des réponses par le radar de l'ordre de -86dBm, la possibilité d'accroitre le lobe effectif de 35 dB jusqu'à 30 NM voire même de 25 dB jusqu'à 120 NM.

L'invention exploite notamment cette marge de signal dans deux cas type que rencontre un radar secondaire, la gestion en mode S des cibles proches et la gestion d'une surcharge crête localisée en azimut, l'invention pouvant bien sûr s'appliquer à d'autres cas.

Dans le cas de la gestion en mode S des cibles proches, le radar calcule la position possible d'une cible lors du rendez-vous d'antenne au tour suivant pour y effectuer une interrogation sélective avec l'adresse mode S de cette cible. Selon les missions du radar, le taux de manœuvre d'une cible à suivre peut-être important principalement si la cible est proche et conduit donc à une dimension en azimut de la fenêtre d'évolution (emplacement possible de la cible au tour suivant) bien plus grande que le lobe effectif usuel du radar.

Selon l'invention, le radar modifie dynamiquement son réglage en émission et en réception pour accroitre son faisceau effectif selon la dimension de la fenêtre d'évolution uniquement pour les transactions sélectives à effectuer avec cette cible. L'objectif est double :
- réduire le taux d'interrogation pour limiter la pollution ;
- ainsi limiter la perte de temps d'éclairement radar pour traiter d'autres cibles dans le même azimut.

Dans le cas d'une gestion d'une surcharge crête en avions localisée en azimut, plus particulièrement dans le cas d'un secteur azimutal (typiquement 3,5° requis) très chargé en cibles avec un fort taux de transactions sélectives mode S à effectuer (extraction de N « BDS » par tour par cible, souvent N≥2) la durée d'éclairement produite par le faisceau effectif usuel (tout particulièrement si le radar tourne vite comme un radar d'aéroport typiquement à 4 secondes par tour) peut ne pas permettre d'assurer l'ensemble des transactions sélectives mode S requises sur toutes les cibles. Selon l'invention, le radar modifie dynamiquement son réglage en émission et en réception pour accroitre son faisceau effectif selon la distance de la cible afin :
- de reporter toutes les transactions sélectives mode S de la liaison de données (Data Link), sauf une, en dehors du lobe effectif usuel ;
- de garder une transaction sélective mode S, Data Link ou non, dans le lobe effectif usuel pour assurer la localisation précise de la cible qui est la mission première de Surveillance ATC du radar.

On considère deux nouveaux types de réglage de la largeur du faisceau effectif :
- Le réglage dit « Wide Beam », ce réglage étant effectué en émettant toujours les interrogations sélectives mode S sur le diagramme somme (SUM) et en écoutant les réponses sur le diagramme SUM et/ou le diagramme différence (DIFF) avec un faisceau élargi (jusqu'à 6°) en jouant sur les réglages pour la suppression des lobes secondaires à l'interrogation (ISLS) en émission en réduisant la puissance des signaux émis sur CONT de 20 dB et en réception, par abaissement du niveau de RSLS et de TVBC (« Time Variable base Clipping » soit l'adaptation du seuil de détection du radar en fonction de la distance de la cible ») de -20 dB par exemple ;
- Le réglage dit « Enhanced Wide Beam », ce réglage étant effectué en émettant les interrogations sélectives sur le diagramme SUM et/ou DIFF et en écoutant les réponses sur SUM et/ou DIFF avec un faisceau très élargi (jusqu'à 8°), et en jouant également sur les réglages ISLS en émission en réduisant la puissance des signaux émis sur CONT de 20 dB et en réception, par abaissement du niveau de RSLS et TVBC de -20 dB par exemple.

La voie de contrôle permet de réaliser en réception la fonction RSLS de suppression des lobes secondaires à la réception, pour cela elle filtre les signaux captés par les lobes secondaires en ne traitant que les signaux dont le niveau de signal reçu lors d'une détection par SUM ou DIFF vs CONT correspond effectivement à une cible présente dans le lobe principal élargi.

En réception si le niveau du signal reçu par la voie CONT, augmenté d'une valeur paramétrable « RSLS_SUM », est supérieur au niveau reçu par la voie SUM, le radar ne traite pas la réponse reçue sur SUM. De même si le niveau du signal reçu par la voie CONT, augmenté d'une valeur paramétrable « RSLS_DIFF », est supérieur au niveau reçu par la voie DIFF, le radar ne traite pas la réponse reçue sur DIFF. Dans le cas de la présente invention, les seuils RSLS_SUM et RSLS_DIFF peuvent être réduits à -20 dB.

On peut en permanence, et cela pour une même cible, au niveau de chaque transaction mode S, nuancer entre les trois réglages proposés : Standard, Wide Beam et Enhanced Wide Beam, voire entre ceux-ci en réglant de manière plus fine (de 0 à -20 dB) mais toujours de façon cohérente entre :
- émission : le niveau de puissance sur ISLS ;
- réception : à la fois le seuil RSLS_SUM ou RSLS_DIFF ainsi que la TVBC.

Ces réglages sont synthétisés par le tableau qui suit, puis illustrés en regard des figures 3a à 3c et des figures 4a et 4b.

Dans les deux cas, le réglage paramétré de ISLS, RSLS et TVBC permet d'ajuster avec un pas meilleur que le 0,25 degré la largeur du faisceau EBW.

Le tableau ci-dessous synthétise donc ces réglages pour un radar secondaire selon l'invention, en application ATC ou IFF (les valeurs données en exemple correspondent à une antenne ATC usuelle).

**[Table 1]**

| | Emission 1030MHz | | Réception 1090MHz | | | | | **Applications cibles** |
|---|---|---|---|---|---|---|---|---|
| Type de réglage | TX | ISLS | RX | RSLS | TVBC | EBW proche | EBW loin | |
| | | dB | | dB | Law | degré | degré | |
| «Standard beam» (réglage Usuel) | SUM | 0 | SUM | 9 | 3 | (4) ^{≈}2,4 | ^{≈}2,4 | Mode S & Non Mode S toute portée |
| «Wide Beam» | SUM | -20 | SUM + DIFF | -20 | sans | >6 | ^{≈}2,4 | Mode S proche à moyenne portée |
| «Enhanced Wide Beam» | DIFF ou SUM | -20 | SUM + DIFF | -20 | sans | >8 | ^{≈}6 | Mode S proche à longue portée |

Classiquement, alors que la largeur du lobe effectif est autour de +/- 2° en proche distance, les radars actuels exploitent principalement la partie d'écartométrie utile en mode S pour la surveillance, soit +/- 1,2° sur toute la portée, d'où la largeur de 2,4° reportée dans le tableau ci-dessus.

Le tableau rappelle également le réglage usuel (« Standard beam ») en émettant les interrogations sélectives sur la voie SUM et en écoutant les réponses sur la voie SUM avec le faisceau standard de largeur sensiblement égale au lobe de Surveillance soit 2,4° pour avoir une écartométrie f(DIFF/SUM) utilisable de bonne qualité pour la précision azimutale du radar parmi les 4° possibles du faisceau effectif EBW.

L'emploi de ces réglages dans les deux exemples de gestions précités (« Wide Beam et Enhanced Wide Beam ») permet, lors de la phase de chasse (recherche de la position de la cible dans la fenêtre d'évolution) en fonction de la position de l'antenne par rapport à la position prédite, d'échantillonner (par les interrogations sélectives) la fenêtre d'évolution avec les différents réglages de faisceaux : « Wide Beam » (^{≈} 6°) et « Enhanced Wide Beam » (^{≈} 8°) soit donc avec un pas désormais de plus de 2 à 3 fois le pas du faisceau standard « Standard Beam » (^{≈} 2,4°) réduisant ainsi le nombre d'interrogations dans le même rapport.

On peut noter que le passage d'un faisceau à l'autre est paramétrable par l'opérateur a priori en fonction de la probabilité d'évolution des cibles et de leur taux de réponse : on peut ainsi faire chevaucher des azimuts couverts par différentes interrogations pour s'adapter à des avions de mauvais taux de réponse au détriment du nombre d'interrogations émises.

Lors d'une détection on pré-localise la position d'une cible en azimut en utilisant les caractéristiques de l'antenne et les niveaux reçus (ou pas) sur les trois diagrammes SUM, DIFF et contrôle avant (CONT_front).

Ensuite, lors de la phase de dialogue avec la cible on effectue toutes les transactions Data Link (extraction de BDS ou autres) restantes, sauf une, à priori, en dehors du lobe de surveillance (^{≈}2,4°). Pour améliorer, de plus, la précision azimutale du radar et ne pas sur-interroger, on calcule pour effectuer la dernière interrogation (à objet de surveillance seulement ou peut-être de Data Link), la période RC (Roll Call) pour laquelle la cible est la plus proche de l'axe de l'antenne (minimum de gain sur DIFF et maximum de gain SUM) en utilisant la position pré-localisée en azimut établie avec assez de précision lors de la détection en phase de chasse.

L'invention propose une gestion optimisée du faisceau effectif (EBW) d'un radar secondaire ATC/IFF en exploitant l'aérien existant (antenne, joint tournant, câbles) grâce à une adaptation dynamique aux caractéristiques de chaque cible concernée. Cela est réalisé en gérant au niveau de chaque transaction mode S (interrogation et réponse) pour chaque cible mode S, indépendamment des autres cibles mode S, pour au moins les trois types de faisceaux différents ci-dessous (valeur ajustable entre elles avec un pas pouvant descendre à 0,25° selon la vitesse de rotation du radar) :
- « Enhanced Wide Beam » (EBW maximal ≥ 8°) ;
- « Wide Beam » (EBW maximal ≥ 6°) ;
- « Standard Beam » (EBW typique ≥ 2,4°).

Pour les cibles mode S proches, l'adaptation dynamique est réalisée en parcourant la fenêtre d'évolution de celles-ci :
- en phase de chasse grâce à un faisceau plus élargi (« Wide Beam » ou « Enhanced Wide Beam ») afin de réduire drastiquement le taux d'interrogation sélectif (deux à trois fois moins qu'actuellement) ;
- en phase de localisation après détection en revenant à un faisceau usuel (« Standard Beam ») et en améliorant la précision azimutale du radar sur ce type de cible en gardant une interrogation en centre lobe.

Pour les cibles mode S jusqu'à une moyenne distance, l'adaptation dynamique est réalisée en répartissant les transactions par nature dans le faisceau :
- en réalisant toutes les transactions de type Data Link sauf une en bord de lobe du faisceau standard, donc entre environ ± 1,2° et le lobe élargi (« Wide Beam » entre environ ± 3°, ou « Enhanced Wide Beam » entre environ ± 4°) ;
- en gardant une transaction (Data Link ou non) pour la localisation en azimut au plus proche du centre du lobe.

Les figures 3a, 3b et 3c illustrent les différents réglages du faisceau d'émission, pour une antenne de type LVA, conduisant au faisceau du type « Standard Beam » (figure 3a), au faisceau du type « Wide Beam » (figure 3b) et au faisceau du type « Enhanced Wide Beam » (figure 3c). L'antenne est une antenne ATC.

L'antenne comporte :
- un diagramme SUM pour les interrogations ;
- un diagramme CONT pour bloquer les transpondeurs en dehors du lobe principal ;
- un diagramme DIFF, usuellement non exploité en émission, pour localiser les cibles dans le lobe en réception.

Par convention, dans ces figures et suivantes en azimut, les tracés en trait gras, plein ou pointillé, correspondent à la décision de traitement du récepteur en fonction de l'énergie rayonnée sur le diagramme CONT et de ses paramètres internes :
- soit du transpondeur pour les figures 3a, 3b et 3c ;
- soit du radar pour les figures 4a et 4b.

Dans les figures 3a, 3b et 3c on représente les diagrammes SUM, DIFF et CONT dans le plan azimut, pour l'émission. Les diagrammes de l'antenne restent fixes, c'est l'énergie rayonnée qui est modulée en puissance pour permettre des réglages différents de l'EBW_TX.

Le réglage du lobe effectif en émission s'effectue via le niveau de signal ISLS dont une fonction essentielle est de bloquer les transpondeurs en dehors du faisceau principal, susceptibles d'être interrogés involontairement par les interrogations rayonnées via les lobes secondaires.

Les antennes ATC sont de grande dimension afin d'être de très bonne qualité avec des lobes secondaires très bas permettant sans risque, de plus en mode S naturellement sélectif, d'interroger par un lobe secondaire.

Le niveau d'énergie rayonnée par le diagramme CONT varie donc, permettant d'élargir la largeur effective du faisceau d'émission (EBW_TX), la largeur effective étant définie entre les deux points d'intersection entre le diagramme SUM (vs DIFF) et le diagramme ISLS (typiquement diagramme CONT + écart puissance entre interrogation sélective sur SUM_vs DIFF et le signal sur CONT qui est un réglage intrinsèque du transpondeur) à une position donnée en azimut de la cible vs l'axe de l'antenne. La figure 3a illustre le cas du réglage usuel (« Standard Beam » - premier réglage du tableau) :
- La courbe 31 représente le seuil d'un transpondeur réglé à 0dB, soit le diagramme rayonné par CONT puisque la puissance ISLS émise est égale à celle de l'interrogation sur SUM : celle donnant l'EBW_TX le plus grand ;
- Les courbes 32, 33 en traits discontinus correspondent à des remontées du diagramme CONT selon les 2 autres réglages possibles d'un transpondeur :
- la courbe 33 illustrant le réglage à +9 dB, mise en œuvre classiquement pour définir l'EBW_TX garanti d'un transpondeur ;
- alors que la courbe 32 illustrant le réglage à +5 dB, donnant typiquement l'EBW_TX moyen d'un transpondeur.

Les points d'intersection A, A' entre les courbes SUM et CONT délimitent la largeur garantie de lobe effectif disponible au niveau des transpondeurs, sensiblement inférieur à 4°. les points A" et A'" délimitent la largeur maximale de lobe effectif en réglage « Standard Beam ».

La figure 3b correspond à un premier élargissement du lobe effectif, correspondant au réglage « Wide Beam » (deuxième réglage du tableau).

La largeur effective de faisceau est obtenue ici en abaissant l'énergie rayonnée par le diagramme CONT de 20 dB illustré par la courbe 34, délimitée par les points d'intersections B, B'. Le faisceau effectif EBW garanti est sensiblement égal à 6°. les points B" et B'" délimitent la largeur maximale de lobe effectif en réglage « Wide Beam ».

On précise que l'invention est notamment applicable avec le réglage « Wide Beam » seul.

La figure 3c illustre un élargissement supplémentaire, l'élargissement le plus large correspondant au réglage « Enhanced Wide Beam » (troisième réglage du tableau). Dans cette configuration, on conserve le même abaissement du diagramme CONT, illustré par la courbe 34, mais on réalise l'émission des interrogations sélectives Mode S principalement sur le diagramme DIFF. La largeur de faisceau effective garantie est ainsi délimitée par les points d'intersections C, C' entre le diagramme CONT et le diagramme DIFF. La largeur de faisceau effective garanti est ici sensiblement égale à 8°. Les points C" et C'" délimitent la largeur maximale de lobe effectif en réglage « Enhanced Wide Beam ».

L'émission sur le diagramme DIFF est réalisée selon le procédé décrit dans la demande de brevet français publiée sous le numéro 2 965 063.

Sur le plan matériel, le radar secondaire comporte donc une antenne présentant un diagramme de rayonnement formant la voie SUM, un diagramme de rayonnement formant la voie DIFF et un diagramme de rayonnement formant la voie CONT et des moyens pour générer des messages d'interrogation Mode S sur la voie SUM et des moyens pour générer des signaux ISLS sur la voie CONT, ainsi que des moyens pour émettre ces messages par les voies SUM et CONT. Il comporte également des moyens pour assurer la réception et le traitement des signaux reçus par les voies SUM, DIFF et CONT, configurés pour détecter les réponses de cibles (aéronefs) sur les signaux reçus par la voie SUM et réaliser un traitement monopulse et un traitement SLS sur ces réponses en utilisant les signaux reçus par les voies DIFF (pour l'écartométrie) et CONT (pour la suppression des lobes secondaires - RSLS) de l'antenne.

Pour mettre en œuvre l'émission sur le diagramme DIFF, et donc obtenir un faisceau élargi du type « Enhanced Wide Beam », les moyens pour générer des messages d'interrogation sont en plus configurés pour générer également des messages d'interrogation sur la voie DIFF, et les moyens d'émission sont également configurés pour pouvoir émettre ces messages par la voie DIFF de l'antenne.

Les figures 4a et 4b illustrent les réglages en réception, à 1090 MHz. En réception, la voie SUM est utilisée pour les détections des réponses, la voie CONT pour filtrer les réponses en dehors du lobe principal et la voie DIFF classiquement pour localiser les réponses par écartométrie mais aussi pouvant être utilisée pour la détection.

La figure 4a illustre un réglage classique. Les limites usuelles de la fonction d'écartométrie classique utilisant les diagrammes DIFF et SUM quasiment entre les points où SUM=DIFF sont définies par les lignes 41, 42 correspondant aux intersections entre les diagrammes SUM et DIFF. Les limites angulaires de l'émission sont définies par les lignes 43, 44 correspondant aux intersections entre les diagrammes SUM et CONT remonté de RSLS à 9dB.

La figure 4b illustre un réglage selon l'invention. L'invention exploite dans ce réglage un lobe effectif maximal en détection (émission) délimité :
- soit par les droites 45', 46' correspondant à l'intersection du diagramme SUM et du diagramme CONT dans la position abaissée au maximum typiquement de 20dB courbe 49 ;
- soit par les droites 43', 44' correspondant à l'intersection du diagramme DIFF et du diagramme CONT dans la position abaissée au maximum typiquement de 20dB courbe 49.

Dans cette limite, le lobe est constitué de trois parties :
- une première zone d'azimut A1 délimitée par les droites 41', 42' correspondant aux intersections des diagrammes SUM et DIFF, pour la surveillance en écartométrie f(DIFF/SUM) centrée avec la précision requise pour la mission du radar, usuellement jusqu'à environ ± 1,2° ;
- une deuxième zone A2 délimitée par les droites symétrique 45', 46', extérieures aux droites précédentes 41', 42', pour une surveillance en écartométrie f(DIFF/SUM) étendue pour localiser moins finement une cible dans le lobe afin de la réinterroger dans la première zone, typiquement d'environ ± 1,2° à environ ± 3° ;
- une troisième zone A3, correspondant au lobe maximal, délimitée par les droites 43', 44' précitées, pour pré-localiser moins précisément en écartométrie selon l'invention f(DIFF/CONT) une cible dans le lobe afin de la réinterroger dans la première zone, typiquement d'environ ± 2,5° à environ ± 4,5° ; en effet, l'écartométrie selon l'invention f(DIFF/CONT) peut être aussi avantageusement utilisée dans la zone A2 tout particulièrement quand la puissance reçue sur CONT devient plus grande que celle reçue sur SUM soit dès +/-2,5°.

Il est à noter que le réglage du lobe effectif en réception s'effectue via le niveau de signal RSLS dont la fonction essentielle est de supprimer les réponses de transpondeurs en dehors du faisceau principal, ceux-ci étant généralement des fruits ou des réponses synchrones réfléchies sur des obstacles.

Le réglage du lobe effectif en réception s'effectue également via la suppression de la loi TVBC qui classiquement limite la dynamique des réponses traitées à au plus 15dB inférieur au max de SUM dans le lobe. A nouveau, en mode S l'aspect sélectif de la réponse attendue assez précisément en azimut et distance permet de réduire à la fois le seuil RSLS ainsi que le niveau de signal requis par la TVBC sans risque de fausse détection voire à la supprimer.

Selon l'invention on effectue une pré-localisation :
- par l'écartométrie étendue (fonction des niveaux sur SUM et sur DIFF) pour les détections en bord de lobe typiquement jusqu'à environ +/-2,5° ;
- par une nouvelle écartométrie (fonction des niveaux sur DIFF et sur CONT) pour les détections en bord de lobe typiquement à partir de +/-2,5° jusqu'à +/-4,5° ;
afin de compléter l'écartométrie f(DIFF/SUM) précise applicable dans le lobe principal.

L'objectif de cette pré-localisation en azimut est de permettre de choisir la prochaine RC la plus proche du centre du lobe principal pour interroger sélectivement à nouveau cette cible afin de réaliser une prochaine détection avec une localisation de surveillance en azimut la plus précise (l'optimum de précision en écartométrie se situant au centre du lobe).

Les avions évoluant à courte et moyenne distance du radar présentent une forte dynamique, tant vis-à-vis des interrogations du radar que des réponses du transpondeur, permettant de garantir un niveau supérieur au seuil de détection, tant du transpondeur que du radar, malgré une atténuation proche de 35dB apportée par la modulation de lobe. Ceci permet avantageusement d'accroitre la largeur du lobe effectif EBW par réglage.

Néanmoins, comme les signaux en bord de lobe élargi sont de niveau plus faible que ceux au centre lobe, ils sont donc plus « fragiles », en conséquence les faisceaux élargis ne sont utilisés que quand ils ont un apport fonctionnel dans le séquencement du radar mais pas uniquement pour les deux cas d'application cités.

Les faisceaux rayonnés effectifs EBW prennent en compte les combinaisons entre :
- les diagrammes émission avec les réglages émission ;
- les diagrammes réception avec les réglages réception.

pour constituer :
- le faisceau « Standard Beam » (réglage usuel en radar secondaire) :
- Emission des interrogations sur SUM avec réglage du lobe de réponse du transpondeur par un ISLS sur CONT maximal (+9dB) : réduit à la zone réception proche de la surveillance ;
- Réception des réponses sur SUM avec réglage du lobe de traitement des réponses du transpondeur par un RSLS (9dB par exemple adapté au transpondeur minimal en ISLS) et une loi TVBC pour limiter la fausse alarme principalement utile en protocole SSR ;
- le faisceau « Wide Beam » :
- Emission des interrogations sur SUM avec élargissement du lobe de réponse du transpondeur par un ISLS sur CONT qui est atténué (-20dB par exemple) ;
- Réception des réponses sur SUM et/ou DIFF avec élargissement du lobe de traitement des réponses du transpondeur par un RSLS atténué (-20dB par exemple) et d'une loi TVBC atténuée de 20 dB ou supprimée ;
- le faisceau « Enhanced Wide Beam » :
- Emission des interrogations sur DIFF avec élargissement du lobe de réponse du transpondeur par un ISLS sur CONT atténué (-20dB par exemple), cette émission sera décrite par la suite ;
- Réception des réponses sur DIFF et SUM et avec élargissement du lobe de traitement des réponses du transpondeur par un RSLS atténué (-20dB par exemple) et d'une loi TVBC atténuée de 20 dB ou supprimée.

On décrit maintenant la gestion optimisée des cibles mode S proches.

Un objectif de cette mise en œuvre de l'invention est de réduire le taux d'interrogations du radar pour une cible, principalement à courte distance du radar. En effet pour ce type de cible, l'évolution potentielle suite à une manœuvre possible de la cible entre deux détections nécessite que la fenêtre de chasse du radar au prochain tour pour cette cible soit élargie bien au-delà du faisceau EBW, en raison de l'incertitude de trajectoire de la cible (fenêtre d'évolution de la cible entre les tours), en fonction à la fois :
- de la période de rotation d'antenne du radar ;
- du taux de manœuvre possible des cibles à pister (taux d'amplitude de l'incertitude de trajectoire).

Le principe de l'invention consiste à modifier dynamiquement le faisceau effectif EBW mode S pour la cible concernée selon la position de l'axe de l'antenne vis-à-vis de la position prédite de la cible. La position prédite est celle correspondant à une continuité dans le vol de la cible depuis les tours d'antenne précédents. En pratique, c'est la position la plus probable.

L'adaptation du lobe effectif EBW est effectuée au fur et à mesure du rapprochement de l'axe de l'antenne et de la position prédite selon le niveau d'équipement du radar, un équipement complet permettant un traitement par faisceaux « Enhance Wide Beam », « Wide Beam » et « Standard Beam », un équipement usuel permettant un traitement par faisceau « Wide Beam » et « Standard Beam ».

Les moments de basculement d'un lobe effectif à l'autre sont totalement paramétrables par un opérateur selon notamment :
- la mission du radar ;
- le type de cible à détecter (son taux de réponse, son évolutivité, ..) ;
- les contraintes de taux de ré-interrogation dans la zone de la cible, pouvant dépendre notamment de l'azimut de la cible ;
- la quantité de transactions mode S à réaliser par avion et par tour notamment à cet azimut.

La figure 5 illustre le principe de gestion dynamique d'un faisceau selon la position de l'axe de l'antenne (en azimut) vis-à-vis de la fenêtre possible de position d'une cible évolutive pour un radar avec un équipement complet. Plus précisément, la figure 5 illustre les différents faisceaux (« Enhanced Wide Beam », « Wide Beam » et « Standard Beam ») en regard de la position azimutale prédite de la cible, les faisceaux étant eux-mêmes représentés en fonction de l'axe d'antenne (dépointage) par rapport à l'azimut (position prédite) de la cible.

Dans la fenêtre d'évolution d'une cible, en fonction du dépointage de l'axe de l'antenne vis-à-vis de la position prédite (celle-ci représentant la position la plus probable de la cible considérant son vol antérieur aux tours précédents), la gestion du radar adapte la largeur du faisceau (« Enhanced Wide Beam », « Wide Beam » ou « Standard Beam ») lors d'une interrogation sélective indépendamment pour chaque cible.

Dans le cas d'une fenêtre d'évolution de grande dimension par rapport au faisceau usuel, l'utilisation d'un faisceau élargi permet de réduire le taux d'interrogation du radar tout en ayant la certitude de détecter la cible classiquement en prenant un pas d'interrogation en degré de l'ordre d'un demi-faisceau par exemple, soit :
- en « Standard Beam » : 1,2° ;
- en « Wide Beam » : 3° ;
- en « Enhanced Wide Beam » : 4°.

Lorsque la cible est localisée, le radar adapte le faisceau utilisé selon la tâche restante à effectuer avec cette cible et sa position dans le faisceau lors de sa détection :
- maintien du faisceau élargi pour finaliser le Data Link (voir l'exemple ci-après) ;
- passage au faisceau usuel (Standard Beam) pour la localisation précise de surveillance.

Les figures 6a et 6b illustrent des séquencements d'interrogations pour une cible non évolutive. Dans ce cas la position réelle de la cible est confondue avec la position prédite de la cible. Pour ces figures, les flèches en traits discontinus correspondent à des interrogations (TX) qui ont échoué, et les flèches en traits pleins correspondent à des interrogations (TX) qui ont obtenu une réponse. Les longueurs des flèches correspondent à la largeur du lobe que traite le radar. La même codification sera utilisée par la suite pour les figures 7a et 7b.

La figure 6a correspondant à un séquencement usuel et la figure 6b correspondant à un séquencement selon l'invention. La position prédite de la cible et les faisceaux sont représentés dans le même mode de représentation que celui de la figure 5 complétés par :
- les périodes All Call_AC (pour la surveillance des transpondeurs SSR et les interrogations mode S non sélectives) sont représentées par des petits carrés ;
- les périodes Roll Call_RC (pour la surveillance mode S sélective) sont représentées par des plus grands rectangles(classiquement une RC dure ^{≈} 2 fois une AC) ;
- une période RC pour les interrogations sélectives est en exemple de l'ordre de 0,7° dépendant de la vitesse de rotation de l'antenne du radar.

La position de l'antenne est représentée par des ronds en regard du dépointage de l'axe de l'antenne par rapport à la position prédite de la cible, les émissions des interrogations pour cette cible étant repérées par le symbole « tx » lors des RC.

Dans le cas de la figure 6a (séquencement usuel), la faible largeur du faisceau (« Standard beam ») oblige à émettre beaucoup d'interrogations, notamment plus on se rapproche du faisceau car la probabilité de présence de la cible s'y accroit en pratique.

Dans le cas de la figure 6b, selon l'invention, on modifie dynamiquement, selon la figure 5, le faisceau effectif EBW pour la cible en fonction de la position de l'axe d'antenne vis-à-vis de la position prédite de la cible. On adapte alors le nombre d'interrogations à la largeur effective du faisceau. En exemple, sur les figures 6a, 6b, 7a et 7b, le chevauchement de lobes entre 2 interrogations successives est choisi constant à un demi lobe afin de permettre d'assurer d'autres transactions mode S avec la même cible une fois celle-ci détectée. En particulier, on peut réduire le nombre d'interrogations lorsqu'on augmente la largeur du faisceau (« Wide Beam » puis « Enhanced Wide Beam »), réduisant donc en conséquence le nombre d'interrogations inutiles induites lors de la recherche suite à l'évolution de la cible.

Les figures 7a et 7b illustrent des séquencements d'interrogations pour une cible évolutive. Dans ce cas la position réelle de la cible diffère de la position prédite de la cible ayant évoluée en azimut croissant ce qui constitue le pire cas d'interrogations sélectives inutiles.

La figure 7a correspondant à un séquencement usuel et la figure 7b correspondant à un séquencement selon l'invention. La position prédite de la cible, ainsi que sa position réelle, et les faisceaux sont représentés dans le même mode de représentation que celui de la figure 5. Dans le cas de la figure 7a, la faible largeur du faisceau impose d'émettre un grand nombre d'interrogations. Dans le cas de la figure 7b, l'adaptation du nombre d'interrogations à la largeur du faisceau, modifiée dynamiquement en fonction du dépointage de l'antenne par rapport à la position prédite ou réelle de la cible, permet ici encore de réduire notablement le nombre total d'interrogations.

La comparaison entre les figures 6a et 6b d'une part, et entre les figures 7a et 7b d'autre part, montre que l'invention permet d'obtenir un gain de 50% à 60% sur le taux d'interrogations inutiles induit naturellement par l'évolution des cibles. En effet, dans le cas de la cible non évolutive, il y a 4 interrogations inutiles (figure 6b) au lieu de 10 (figure 6a), et dans le cas d'une cible évolutive, il y a 10 interrogations inutiles (figures 7b) au lieu de 21 (figure 7a).

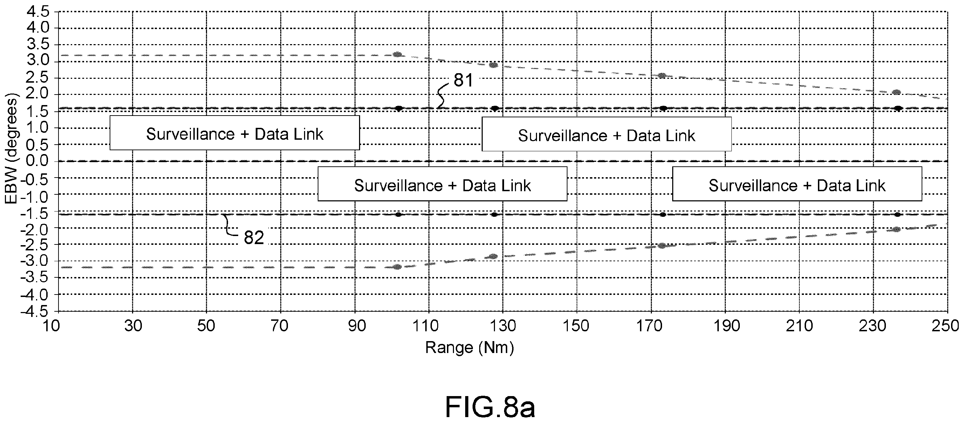

Les figures 8a, 8b et 8c illustrent des transactions mode S en fonction de la distance à une cible, plus particulièrement la gestion des transactions mode S par nature dans le faisceau. Dans ces figures, l'axe des ordonnées représente la largeur du faisceau en azimut et l'axe des abscisses la distance.

La figure 8a illustre le cas usuel (« Standard Beam ») où les transactions (surveillance et données) sont toutes effectuées dans un faisceau central d'une largeur donnée délimité par les lignes 81, 82, largeur typiquement égale à environ 3° selon certaines exigences opérationnelles pouvant même amener à réduire à 2,4° le lobe effectif pour assurer la localisation en surveillance de n'importe quelle transaction mode S.

Les figures 8b et 8c illustrent des gestions selon l'invention respectivement pour un cas « Wide Beam » et pour un cas « Enhanced Wide Beam ».

Un objectif de cette gestion selon l'invention est notamment de traiter une plus forte charge locale de transactions mode S en azimut, typiquement 3,5° selon les exigences opérationnelles d'Eurocontrol, en répartissant cette charge dans un faisceau élargi de type « Wide Beam » ou « Enhanced Wide Beam » selon le niveau d'équipement du radar.

A cet effet, le procédé selon l'invention utilise également avantageusement l'adaptation des faisceaux en fonction du nombre de transactions mode S à effectuer, réalisant ainsi une gestion optimum de ces transactions.

Le radar établit ainsi le nombre de transactions mode S à effectuer dans une largeur donnée de faisceau, par exemple 3,5°, lors de la prochaine tranche d'azimut, par exemple les 5 prochains degrés.

Si ce nombre de transactions dépasse la capacité de transactions mode S pour un lobe usuel « Standard Beam » pour la configuration radar (vitesse de rotation, type d'antenne, mode d'interrogation à effectuer, portée radar instrumentée ...), le radar élargit dynamiquement 83, 84 le faisceau effectif EBW mode S en type « Wide Beam » pour chaque cible dans ce faisceau selon le nombre N de transactions à effectuer avec cette cible.

Afin de positionner N-1 transactions par cible en dehors du lobe principal, le radar :
- pré-localise la cible en bord de lobe principal par écartométrie entre les signaux des diagrammes DIFF et SUM ou DIFF et CONT ;
- conserve une transaction, Data Link ou non, au centre du lobe pour positionner la cible précisément en azimut, assurant ainsi la tâche de surveillance.

La figure 8b illustre ce cas. La charge (de Surveillance et Data Link) est alors répartie sur 6° jusqu'à mi-distance d'un radar longue portée (environ 170 NM dans l'exemple de la figure). Cela permet avantageusement, selon la répartition des cibles en distance de gagner plus de 50% du temps d'éclairement vis-à-vis du lobe usuel « Standard Beam ».

La figure 8c illustre le cas d'utilisation du faisceau « Enhanced Wide Beam » que le radar peut mettre en œuvre s'il possède les équipements requis. Dans ce cas, l'élargissement du faisceau 85, 86 permet de répartir encore plus les transactions Data Link pour quasiment tous les avions sur 8° jusqu'à mi-distance et sur plus de 5° à longue distance. La figure 8c montre qu'on peut avantageusement émettre des données (Data Link) sur les bords du faisceau, et au global en plus grand nombre.

Les figures 8b et 8c montrent que l'invention effectue avantageusement une gestion dynamique des transactions, par adaptation dynamique des faisceaux rayonnés, notamment en fonction de la proximité des cibles (avions), en fonction du nombre d'avions à gérer en azimut c'est-à-dire finalement en fonction de la distribution de la charge et du nombre d'avions en azimut.

La gestion dynamique et adaptative du faisceau peut s'appliquer aussi pour des cibles à très longue portée ayant un bas taux de réponse suite par exemple à leur présence dans une zone géographique à fort taux d'interrogation par d'autres senseurs. Pour accroitre le nombre d'interrogations sélectives sur cette cible, requis par son faible taux de réponse pour la détecter néanmoins, le radar interroge sur DIFF, puis sur SUM et enfin continue si besoin sur DIFF tant que le radar n'a pas obtenu les réponses requises de la cible Dans le cas de cible en longue portée, la fenêtre d'évolution est très petite, réduite en pratique à la fenêtre de bruit du radar, la cible est donc parfaitement connue en position, le radar peut donc utiliser avec certitude le diagramme SUM ou DIFF pour interroger selon l'écart en azimut entre l'axe de l'antenne et la position prédite de la cible.

La figure 9a présente le lobe effectif typique avec une antenne ATC d'une cible à très longue distance classiquement vue par le radar à une élévation nulle, pour laquelle le bilan radar ne permet classiquement qu'une modulation de lobe d'environ 4dB ce qui conduit à une lobe effectif EBW en bout de portée autour de +/-1,25°.

La figure 9b présente par étapes la gestion dynamique du faisceau pour une cible à longue portée, respectivement :
- quand l'azimut 91 de l'axe de l'antenne est inférieur à 2,5° de l'azimut de la position prédite de la cible, représenté par un trait 92, le radar n'interroge pas cette cible ;
- quand l'azimut de l'axe de l'antenne est inférieur entre 1,2° et 2,5° de l'azimut de la position prédite de la cible le radar interroge sélectivement cette cible en utilisant le diagramme DIFF ;
- quand l'azimut de l'axe de l'antenne est entre -1,2° et 1,2° de l'azimut de la position prédite de la cible le radar interroge sélectivement cette cible en utilisant le diagramme SUM ;
- quand l'azimut de l'axe de l'antenne est supérieur entre 1,2° et 2,5° de l'azimut de la position prédite de la cible le radar interroge sélectivement cette cible en utilisant le diagramme DIFF ;
- quand l'azimut de l'axe de l'antenne est supérieur à 2,5° de l'azimut de la position prédite de la cible le radar n'interroge plus cette cible.

Cette approche permet donc sur des cibles à faible taux de détection dû à un environnement pollué de doubler le lobe effectif et ainsi en doublant (l'EBW passe de ^{≈}2,5° à 5°) le nombre d'interrogations sélectives sur cette cible de mieux en assurer sa détection par le radar.

L'invention a été décrite pour être mise en œuvre par un radar secondaire ATC. Elle s'applique également pour un radar de type IFF qui doit surmonter la même problématique.

## Revendications

1. Radar secondaire comportant une antenne présentant un diagramme de rayonnement formant une voie somme dite SUM, un diagramme de rayonnement formant une voie différence dite DIFF et un diagramme formant une voie de contrôle dite CONT, des moyens pour générer au moins des messages d'interrogation sur la voie SUM et des signaux ISLS sur la voie CONT, des moyens d'émission de ces messages respectivement par la voie SUM et par la voie CONT, des moyens de réception et de traitement des signaux reçus par les voies SUM, DIFF et CONT configurés pour détecter les réponses de cibles sur les signaux reçus par la voie SUM et/ou DIFF et réaliser un traitement d'écartométrie et un traitement RSLS sur ces réponses, **caractérisé en ce que** les moyens d'émission sont configurés de telle sorte que, pour chaque cible indépendamment, la largeur du faisceau de transmission des interrogations et de réception des réponses sélectives mode S est commandée dynamiquement en fonction de la fenêtre d'évolution de ladite cible et de la position de l'axe de ladite antenne dans ladite fenêtre afin d'assurer la détection de ladite cible en réduisant le nombre d'interrogations sélectives par une sous-interrogation sélective de ladite cible tout en garantissant son positionnement précis en azimut :
- en pré-localisant ladite cible en bord du lobe principal de réception de ladite antenne par écartométrie entre les signaux reçus sur les voies DIFF et SUM ;
- en réinterrogeant sélectivement en mode S ladite cible pré-localisée par calcul de la période « Roll Call » la plus proche du centre dudit lobe principal pour assurer la précision en azimut.

2. Radar secondaire selon la revendication 1, **caractérisé en ce que** les moyens d'émission sont configurés de telle sorte que, pour chaque cible, la largeur du faisceau de transmission des interrogations et de réception des réponses sélectives mode S est commandée en fonction du nombre pré-évalué de transactions sélectives à traiter dans un azimut donné, ledit faisceau étant élargi indépendamment pour chaque cible si ledit nombre est supérieur au nombre potentiel réalisable de transactions sélectives dans un faisceau de type standard (81, 82) :
- en répartissant les transactions dites « data link » en dehors (81, 83, 82, 84) dudit faisceau standard alors dédié principalement à la surveillance ;
- en pré-localisant la cible en bord dudit lobe principal par écartométrie étendue en exploitant les réponses reçues sur les voies DIFF et SUM ;
- en conservant une transaction, de type « data link » ou non, et en réinterrogeant sélectivement en mode S ladite cible pré-localisée par calcul du signal « Roll Call » le plus proche du centre dudit lobe principal pour assurer la précision en azimut.

3. Radar secondaire selon l'une quelconque des revendications précédentes, **caractérisé en ce que** l'augmentation de la largeur (B, B', 43, 44) dudit faisceau de transmission des interrogations sélectives mode S est obtenue par atténuation du champ rayonné (34) par le diagramme CONT.

4. Radar secondaire selon l'une quelconque des revendications précédentes, **caractérisé en ce que** les moyens pour générer des messages d'interrogations étant en plus configurés pour générer également des messages d'interrogation sur la voie DIFF, et les moyens d'émission étant également configurés pour pouvoir émettre ces messages par la voie DIFF de l'antenne, ledit radar pré-localise la cible en bord dudit lobe principal par écartométrie en exploitant les réponses reçues sur les diagrammes DIFF et CONT.

5. Radar secondaire selon la revendication 1, **caractérisé en ce que** les moyens d'émission sont configurés de telle sorte que, pour chaque cible, la largeur du faisceau de transmission des interrogations et de réception des réponses sélectives mode S est commandée en fonction du nombre pré-évalué de transactions sélectives à traiter dans un azimut donné, ledit faisceau étant élargi si ledit nombre est supérieur au nombre potentiel réalisable de transactions sélectives dans un faisceau de type standard (81, 82) :
- en répartissant les transactions dites « data link » en dehors (81, 85, 82, 86) dudit faisceau standard totalement alloué à la Surveillance ;
- en pré-localisant la cible en bord dudit lobe principal par écartométrie très étendue en exploitant les réponses reçues sur les diagrammes DIFF et CONT ;
- en conservant une transaction, de type « data link » ou non, et en ré-interrogeant sélectivement en mode S ladite cible pré-localisée par calcul du signal « Roll Call » le plus proche du centre dudit lobe principal pour assurer la précision en azimut.

6. Radar secondaire selon la revendication 4, **caractérisé en ce que** l'augmentation de la largeur (C, C', 43', 44') dudit faisceau de transmission des interrogations sélectives mode S est obtenue en utilisant la voie DIFF pour l'émission desdites interrogations et en abaissant le champ rayonné (34) par le diagramme CONT.

7. Radar secondaire selon la revendication 1, **caractérisé en ce que** les moyens d'émission sont configurés de telle sorte que, pour chaque cible, la largeur du faisceau de transmission des interrogations et de réception des réponses sélectives mode S est commandée en fonction d'un taux de détection des réponses d'avion pour lequel le nombre d'interrogations est ainsi potentiellement doublé en interrogeant sélectivement chaque cible de ce type successivement sur DIFF, puis SUM et enfin sur DIFF si encore besoin.

8. Radar secondaire selon l'une quelconque des revendications précédentes, caractérisé en qu'il est du type ATC.

9. Radar secondaire selon l'une quelconque des revendications 1 à 7, **caractérisé en ce qu'**il est du type IFF.

## Patentansprüche

1. Sekundärradar, das Folgendes umfasst: eine Antenne mit einem Strahlungsdiagramm, das einen SUM genannten Summenkanal bildet, einem Strahlungsdiagramm, das einen DIFF genannten Differenzkanal bildet, und einem Diagramm, das einen CONT genannten Kontrollkanal bildet, Mittel zum Erzeugen von mindestens Abfragenachrichten auf dem SUM-Kanal und von ISLS-Signalen auf dem CONT-Kanal, Mittel zum Senden dieser Nachrichten über den SUM-Kanal bzw. den CONT-Kanal, Mittel zum Empfangen und Verarbeiten der über die Kanäle SUM, DIFF und CONT empfangenen Signale, konfiguriert zum Detektieren der Antworten von Zielen auf die über den Kanal SUM und/oder DIFF empfangenen Signale und zum Durchführen einer Abweichungsmessverarbeitung und einer RSLS-Verarbeitung auf diese Antworten, **dadurch gekennzeichnet, dass** die Sendemittel so konfiguriert sind, dass für jedes Ziel unabhängig die Breite des Strahls zur Übertragung der Abfragen und zum Empfang der selektiven S-Modus-Antworten dynamisch in Abhängigkeit vom Verlaufsfenster des Ziels und der Position der Achse der Antenne in dem Fenster gesteuert wird, um die Detektion des Ziels sicherzustellen, indem die Anzahl selektiver Abfragen durch eine selektive Subabfrage des Ziels unter Gewährleistung seiner genauen Positionierung im Azimut verringert wird:
- durch Vororten des Ziels am Rand der Hauptempfangskeule der Antenne durch Abweichungsmessung zwischen den auf den Kanälen DIFF und SUM empfangenen Signalen;
- durch erneutes selektives Abfragen des vorgeorteten Ziels im Modus S durch Berechnen der "Roll Call"-Periode, die dem Zentrum der Hauptkeule am nächsten liegt, um die Genauigkeit im Azimut zu gewährleisten.

2. Sekundärradar nach Anspruch 1, **dadurch gekennzeichnet, dass** die Sendemittel so konfiguriert sind, dass für jedes Ziel die Breite des Strahls zur Übertragung der Abfragen und zum Empfang der selektiven Modus-S-Antworten in Abhängigkeit von der vorausgewerteten Anzahl von in einem gegebenen Azimut zu verarbeitenden selektiven Transaktionen gesteuert wird, wobei der Strahl für jedes Ziel unabhängig erweitert wird, wenn die Anzahl größer ist als die potenziell realisierbare Anzahl selektiver Transaktionen in einem Strahl des Standardtyps (81, 82):
- durch Verteilen der sogenannten "Data Link"-Transaktionen außerhalb (81, 83, 82, 84) des Standardstrahls, der dann hauptsächlich zur Überwachung dediziert ist;
- durch Vororten des Ziels am Rand der Hauptkeule durch erweiterte Abweichungsmessung unter Nutzung der auf den Kanälen DIFF und SUM empfangenen Antworten;
- durch Konservieren einer Transaktion des Typs "Data Link" oder nicht, und durch erneutes selektives Abfragen des vorgeorteten Ziels im Modus S durch Berechnen des "Roll Call"-Signals, das dem Zentrum der Hauptkeule am nächsten liegt, um die Azimutgenauigkeit zu gewährleisten.

3. Sekundärradar nach einem der vorhergehenden Ansprüche, **dadurch gekennzeichnet, dass** die Verbreiterung (B, B', 43, 44) des Strahls zur Übertragung von selektiven S-Modus-Abfragen durch Dämpfen des abgestrahlten Feldes (34) durch das CONT-Diagramm erhalten wird.

4. Sekundärradar nach einem der vorhergehenden Ansprüche, **dadurch gekennzeichnet, dass** das Radar das Ziel am Rand der Hauptkeule durch Abweichungsmessung unter Nutzung der in den DIFF- und CONT-Diagrammen empfangenen Antworten vorortet, wobei die Mittel zum Erzeugen von Abfragenachrichten darüber hinaus so konfiguriert sind, dass sie auch Abfragenachrichten auf dem DIFF-Kanal erzeugen, und die Sendemittel auch so konfiguriert sind, dass sie diese Nachrichten über den DIFF-Kanal der Antenne senden können.

5. Sekundärradar nach Anspruch 1, **dadurch gekennzeichnet, dass** die Sendemittel so konfiguriert sind, dass für jedes Ziel die Breite des Strahls zur Übertragung der Abfragen und zum Empfang der selektiven Modus-S-Antworten in Abhängigkeit von der vorausgewerteten Anzahl von in einem gegebenen Azimut zu verarbeitenden selektiven Transaktionen geregelt wird, wobei der Strahl erweitert wird, wenn diese Anzahl größer ist als die potenziell realisierbare Anzahl von selektiven Transaktionen in einem Strahl des Standardtyps (81, 82):
- durch Verteilen der sogenannten "Data Link"-Transaktionen außerhalb (81, 85, 82, 86) des Standardstrahls, der vollständig für Überwachung zugeordnet ist;
- durch Vororten des Ziels am Rand der Hauptkeule durch sehr erweiterte Abweichungsmessung unter Nutzung der in den Diagrammen DIFF und CONT empfangenen Antworten;
- durch Konservieren einer Transaktion des Typs "Data Link" oder nicht, und durch erneutes selektives Abfragen des vorgeorteten Ziels im S-Modus durch Berechnen des "Roll Call"-Signals, das dem Zentrum der Hauptkeule am nächsten liegt, um die Genauigkeit im Azimut zu gewährleisten.

6. Sekundärradar nach Anspruch 4, **dadurch gekennzeichnet, dass** die Verbreiterung (C, C', 43', 44') des Strahls zum Übertragen der selektiven Modus-S-Abfragen unter Nutzung des DIFF-Kanals zum Senden der Abfragen und durch Absenken des abgestrahlten Feldes (34) durch das CONT-Diagramm erhalten wird.

7. Sekundärradar nach Anspruch 1, **dadurch gekennzeichnet, dass** die Sendemittel so konfiguriert sind, dass für jedes Ziel die Breite des Strahls zur Übertragung der Abfragen und zum Empfang der selektiven Modus-S-Antworten in Abhängigkeit von einer Detektionsrate der Flugzeugantworten geregelt wird, für die die Anzahl der Abfragen somit durch Abfragen jedes Ziel dieses Typs selektiv nacheinander auf DIFF, dann SUM und schließlich auf DIFF, falls dies noch erforderlich ist, potenziell verdoppelt wird.

8. Sekundärradar nach einem der vorhergehenden Ansprüche, **dadurch gekennzeichnet, dass** es vom Typ ATC ist.

9. Sekundärradar nach einem der Ansprüche 1 bis 7, **dadurch gekennzeichnet, dass** es vom Typ IFF ist.

## Claims

1. A secondary radar comprising an antenna having a radiating pattern forming a sum channel, called SUM, a radiating pattern forming a difference channel called DIFF and a pattern forming a control channel called CONT, means for generating at least interrogation messages on the SUM channel and ISLS signals on the CONT channel, means for transmitting these messages via the SUM channel and via the CONT channel respectively, means for receiving and processing signals received via the SUM, DIFF and CONT channels, configured for detecting the replies of targets on the signals received via the SUM and/or DIFF channels and carrying out deviation measurement processing and RSLS processing on these replies, **characterized in that** the transmission means are configured so that, for each target independently, the width of the beam for transmitting interrogations and receiving mode S selective replies is controlled dynamically on the basis of the movement window of said target and the position of the axis of said antenna in said window, in order to provide the detection of said target while reducing the number of selective interrogations by a selective sub-interrogation of said target and while ensuring its precise positioning in azimuth:
- by pre-locating said target at the edge of the main reception lobe of said antenna by deviation measurement between the signals received on the DIFF and SUM channels;
- by selectively re-interrogating said pre-located target in mode S by calculation of the roll-call period nearest to the centre of said main lobe to ensure precision in azimuth.

2. The secondary radar according to Claim 1, **characterized in that** the transmission means are configured in such a way that, for each target, the width of the beam for transmitting interrogations and receiving mode S selective replies is controlled on the basis of the pre-evaluated number of selective transactions to be processed in a given azimuth, said beam being widened independently for each target if said number is greater than the potential achievable number of selective transactions in a standard beam (81, 82):
- by distributing what are known as "data link" transactions outside (81, 83, 82, 84) said standard beam, which is then mainly dedicated to surveillance;
- by pre-locating the target at the edge of said main lobe by extended deviation measurement, using the replies received on the DIFF and SUM channels;
- by retaining a transaction, of a "data link" or other type, and selectively re-interrogating said pre-located target in mode S by calculation of the roll-call signal nearest to the centre of said main lobe to ensure precision in azimuth.

3. The secondary radar according to either of the preceding claims, **characterized in that** the increase in the width (B, B', 43, 44) of said mode S selective interrogation transmission beam is achieved by attenuation of the field radiated (34) by the CONT pattern.

4. The secondary radar according to any of the preceding claims, **characterized in that**, the means for generating interrogation messages also being configured for additionally generating interrogation messages on the DIFF channel, and the transmission means also being configured to be capable of transmitting these messages via the DIFF channel of the antenna, said radar pre-locates the target at the edge of said main lobe by deviation measurement, using the replies received on the DIFF and CONT patterns.

5. The secondary radar according to Claim 1, **characterized in that** the transmission means are configured in such a way that, for each target, the width of the beam for transmitting interrogations and receiving mode S selective replies is controlled on the basis of the pre-evaluated number of selective transactions to be processed in a given azimuth, said beam being widened if said number is greater than the potential achievable number of selective transactions in a standard beam (81, 82):
- by distributing what are known as "data link" transactions outside (81, 85, 82, 86) said standard beam, which is totally allocated to surveillance;
- by pre-locating the target at the edge of said main lobe by highly extended deviation measurement, using the replies received on the DIFF and CONT patterns;
- by retaining a transaction, of a "data link" or other type, and selectively re-interrogating said pre-located target in mode S by calculation of the roll-call signal nearest to the centre of said main lobe to ensure precision in azimuth.

6. The secondary radar according to Claim 4, **characterized in that** the increase in the width (C, C', 43', 44') of said mode S selective interrogation transmission beam is achieved by using the DIFF channel for transmitting said interrogations and reducing the field radiated (34) by the CONT pattern.

7. The secondary radar according to Claim 1, **characterized in that** the transmission means are configured in such a way that, for each target, the width of the beam for transmitting interrogations and receiving mode S selective replies is controlled on the basis of a rate of detection of the aircraft replies for which the number of interrogations is thus potentially doubled by selectively interrogating each target of this type successively on DIFF, then SUM, and finally on DIFF if this is still necessary.

8. The secondary radar according to any of the preceding claims, **characterized in that** it is of the ATC type.

9. The secondary radar according to any of Claims 1 to 7, **characterized in that** it is of the IFF type.
